Europäisches Patentamt

European Patent Office

Office européen des brevets

(19)

(11) Publication number: **0 410 719 A2**

# EUROPEAN PATENT APPLICATION

(12)

(21) Application number: 90308144.6

(22) Date of filing: 25.07.90

(51) Int. Cl.⁵: **H04N 1/46**

(30) Priority: 25.07.89 JP 193489/89
04.08.89 JP 203344/89

(43) Date of publication of application:
30.01.91 Bulletin 91/05

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Saito, Takehiko**
**c/o Seiko Instruments Inc., 31-1 Kameido**
**6-chome**
**Koto-ku, Tokyo(JP)**

(74) Representative: **Caro, William Egerton et al**
**J. MILLER & CO. Lincoln House 296-302 High**
**Holbornorn**
**London WC1V 7JH(GB)**

(54) Colour correction system and method.

(57) The present invention provides a colour correction system for correcting a set of three-colour gradation input data, wherein each data item has a length of m-bits, to produce a set of corrected three colour gradation data, wherein each data item has a length of m-bits, characterised by memory means (31) for storing previously calculated sets of corrected colour gradation data in a three dimensional co-ordinate arrangement, wherein each co-ordinate location is designated by a respective set of n-bit address data, n being less than m, means (11, 61) for generating co-ordinate selection data from the least significant (m - n) bits in a set of colour gradation input data, means (21 to 23) operable in response to the most significant n-bits of the set of colour gradation input data and the co-ordinate selection data for generating sets of n-bit address data to cause the memory means to output selected sets of corrected colour gradation data, and means (41, 51) for receiving the selected sets of corrected colour gradation data and for calculating averages thereof for output.

FIG. 1

EP 0 410 719 A2

## COLOUR CORRECTION SYSTEM AND METHOD

The present invention relates to an image processing system and method for use in, for example, a colour printer, a colour copy machine, a colour display system or the like, for which a high colour reproducibility is required.

In a colour correcting method for a colour printer or the like, a colour masking process is used. This colour masking process corrects a set of original three colour gradation data, i.e. cyan data having a gradation C, magenta data having a gradation M, and yellow data having a gradation Y, supplied to the colour printer, to a set of corrected three colour gradation data, i.e. corrected cyan data having a gradation $C'$, corrected magenta data having a gradation $M'$ and corrected yellow data having a gradation $Y'$, by using correction parameters. For example, a first order masking algorithm is expressed by the following formula:

$$\begin{vmatrix} C' \\ M' \\ Y' \end{vmatrix} = \begin{vmatrix} a_{11} & a_{12} & a_{13} \\ a_{21} & a_{22} & a_{23} \\ a_{31} & a_{32} & a_{33} \end{vmatrix} \begin{vmatrix} C \\ M \\ Y \end{vmatrix} \qquad \cdots (1)$$

where $a_{11}$ to $a_{33}$ denote correction parameters.

A second order masking algorithm is expressed by the following formula:

$$\begin{vmatrix} C' \\ M' \\ Y' \end{vmatrix} = \begin{vmatrix} a_{11} & a_{12} & a_{13} & a_{14} & a_{15} & a_{16} & a_{17} & a_{18} & a_{19} \\ a_{21} & a_{22} & a_{23} & a_{24} & a_{25} & a_{26} & a_{27} & a_{28} & a_{29} \\ a_{31} & a_{32} & a_{33} & a_{34} & a_{35} & a_{36} & a_{37} & a_{38} & a_{39} \end{vmatrix} \begin{vmatrix} C \\ M \\ Y \\ C^2 \\ M^2 \\ Y^2 \\ CM \\ MY \\ YC \end{vmatrix}$$

$$\cdots (2)$$

where $C^2$, $M^2$ and $Y^2$ denote self products among the three colour cyan, magenta and yellow input data, CM, MY and CY denote mutual products among the three colour cyan, magenta and yellow input data, and $a_{11}$ to $a_{33}$ denote correction parameters.

A set of the three colour gradation input data (C, M, Y) is employed for previously calculating by the above masking formula (1) or (2) a set of corrected three colour gradation output data ($C'$, $M'$, $Y'$).

As a prior method of colour correction, a method is known wherein the corrected colour gradation output data ($C'$, $M'$, $Y'$) for all combinations of colour gradation input data (C, M, Y) are previously calculated in accordance with the formula (1) or (2) and stored in a table memory, and output of the corrected colour gradation data corresponding to the colour gradation input data (C, M, Y) is carried out by look-up from a look-up table. This method, however, requires a memory having a large capacity for storing all of the previously calculated corrected colour gradation data ($C'$, $M'$, $Y'$), and thus suffers from a disadvantage of a bulky system and high cost. For example, when each colour gradation is expressed by

EP 0 410 719 A2

eight bits (one byte), then to represent 0 to 255 gradations, the capacity of the table memory needs to be $2^{24}$ x 3 bytes (48 M bytes or 384 M bits).

To overcome the disadvantage set forth above, Japanese Examined Patent Publication (kokoku) No. 52-16493 discloses an apparatus in which, to reduce the size of the table memory, only a portion of the full corrected colour gradation data previously obtained by the above mentioned formula and used for providing a look-up table is stored in the table memory, and in which the remaining corrected colour gradation data is not stored in the table memory but is supplied by carrying out interpolation.

In the above mentioned apparatus, in which looking up a look-up table and carrying out an interpolation are combined, the interpolation is carried out independently for each colour gradation. For example, when corrected cyan gradation output data $C'$ is to be obtained, the output data $C'$ is interpolated between adjacent previously calculated corrected cyan gradation data as intermediate data, i.e. as an average of the adjacent corrected cyan gradation data. Specifically, first, the looking up of the look-up table is carried out to find a set of previously calculated corrected colour gradation data $(C_r, M_r, Y_r)$ positioned at the nearest co-ordinate position to the input gradation coordinate (C, M, Y), and another adjacent set of corrected colour gradation data $(C_{r+1}, M_{r+1}, Y_{r+1})$, and second, a one dimensional interpolation of the cyan gradation data C is carried out for only the cyan, on the basis of the relationship between C, $C_r$ and $C_{r+1}$ Namely, to interpolate the cyan element, the relationship of the magenta and yellow gradation data is not considered. Accordingly, so long as the input magenta gradation data M satisfies $M_r \geq M \geq M_{r+1}$ and the input yellow gradation data Y satisfies $Y_r \geq Y \geq Y_{r+1}$, the corrected colour gradation data is the same. This also applies when obtaining other corrected colour gradation data, i.e. corrected magenta and yellow gradation data $M'$ and $Y'$.

Therefore, the method discussed above suffers from the disadvantage of a low accuracy colour reproducibility. In addition, multiplying circuits are required for calculating, for example, where C is located at a position between $C_r$ and $C_{r+1}$, and thus the cost thereof becomes high.

The above problems can also occur in other systems, for example, a colour display system in which a correction for gradation of three fundamental light colours, i.e. red, green and blue, is required.

An object of the present invention, at least in its preferred form described below, is to provide a colour correction system requiring only a relatively small capacity memory for storing previously calculated corrected colour gradation data, enabling a compact circuit construction and providing an improved colour reproducibility.

Another object of the present invention is to provide a corresponding method of correcting colour gradation.

According to one aspect of the present invention, there is provided a colour correction system for correcting a set of three-colour gradation input data, wherein each data item has a length of m-bits, to produce a set of corrected three colour gradation data, wherein each data item has a length of m-bits, characterised by memory means for storing previously calculated sets of corrected colour gradation data in a three dimensional co-ordinate arrangement, wherein each co-ordinate location is designated by a respective set of n-bit address data, n being less than m, means for generating co-ordinate selection data from the least significant (m - n) bits in a set of colour gradation input data, means operable in response to the most significant n-bits of the set of colour gradation input data and the co-ordinate selection data for generating sets of n-bit address data to cause the memory means to output selected sets of corrected colour gradation data, and means for receiving the selected sets of corrected colour gradation data and for calculating averages thereof for output.

The system thus combines looking up a look-up table to find the closest corrected colour gradation data and carrying out an interpolation to obtain the corrected three colour gradation data with an improved colour reproducibility. Consequently, only a relatively small capacity memory for storing the corrected colour gradation data is required.

Advantageously, the system includes a first memory unit for storing previously calculated corrected colour gradation data arranged in a three dimensional co-ordinate space and defined by a combination of most significant n-bits of input data, a second memory unit for storing previously obtained co-ordinate selection data defined by a combination of least significant (m - n) bits of colour gradation input data, the second memory unit outputting first to third co-ordinate selection data in response to the least significant (m- n) bits of colour gradation input data, adding means for adding the most significant n-bits of the first to third colour gradation input data and the first to third co-ordinate selection data and outputting the same to the first memory unit as a memory address thereof to cause an output of the stored corrected colour gradation data defined by the memory address, and average calculating means for receiving the corrected colour gradation data from the first memory unit and for calculating averages of the corrected three colour gradation data.

3

Preferably, the second memory unit consecutively outputs the first to third co-ordinate selection data in response to first to third timings, the adding means consecutively receives and adds the most significant n-bits of the first to third colour gradation input data and the first to third co-ordinate selection data and consecutively outputs the same to the first memory unit of the memory address thereof to consecutively cause the output of the stored corrected colour gradation data, and the average calculating means consecutively receives the corrected colour gradation data and calculates the average in response to further first to third timings different from the initial first to third timings.

In the embodiment of the invention described below, the first memory unit has a capacity of at least $2^{3 \times n} \times 3$ bytes, and the second memory unit has a capacity of at least $2^{(m-n) \times 3}$ bytes, and the interpolation is carried out by considering a mutual relationship among the gradation data for all of the three colours.

The colour gradation data referred to herein relates to cyan, magenta and yellow as three fundamental colour elements, respectively, or to red, green and blue as three fundamental light elements, respectively.

According to a second aspect of the present invention, there is provided a method of correcting a set of three colour gradation input data, wherein each data item has a length of m-bits, to produce a set of corrected three colour gradation data, wherein each data item has a length of m-bits, characterised by storing previously calculated sets of corrected colour gradation data in a three dimensional co-ordinate arrangement, wherein each co-ordinate location is designated by a respective set of n-bit address data, n being less then m, generating co-ordinate selection data from the least significant (m - n) bits in a set of colour gradation input data, generating sets of n-bit address data in response to the most significant n-bits of the set of colour gradation input data and the co-ordinate selection data to access selected sets of corrected colour gradation data, and calculating averages of the selected sets of corrected colour gradation data.

Advantageously, the method according to the present invention includes the steps of:

(a) previously calculating corrected colour gradation data arranged in three dimensional co-ordinates in accordance with a combination of the most significant n-bits of colour gradation input data and co-ordinate selection data in accordance with the least significant (m - n) bits of colour gradation input data,

(b) consecutively obtaining first to third previously calculated co-ordinate selection data on the basis of the least significant bits of colour gradation input data in response to first to third operation timings,

(c) consecutively adding the most significant n-bits of the first to third colour gradation input data and the obtained first to third co-ordinate selection data,

(d) consecutively outputting the previously calculated corrected colour gradation data defined by the first to third selected co-ordinates, and

(e) calculating averages of the consecutively output corrected colour gradation data.

The present invention will be described in more detail, by way of example, with reference to the accompanying drawings, in which:-

Figure 1 is a block diagram of an embodiment of colour correction system according to the present invention;

Figure 2 is a view showing spatial co-ordinates of sets of corrected three colour gradation data stored in a colour correction data table memory of the system of Figure 1;

Figure 3 is an enlarged view of a portion of Figure 2 as an example;

Figures 4a and 4b are views representing the contents of a selection table stored in a selection memory of the system of Figure 1; and

Figure 5 is a timing chart for the operation of the colour correction system shown in Figure 1.

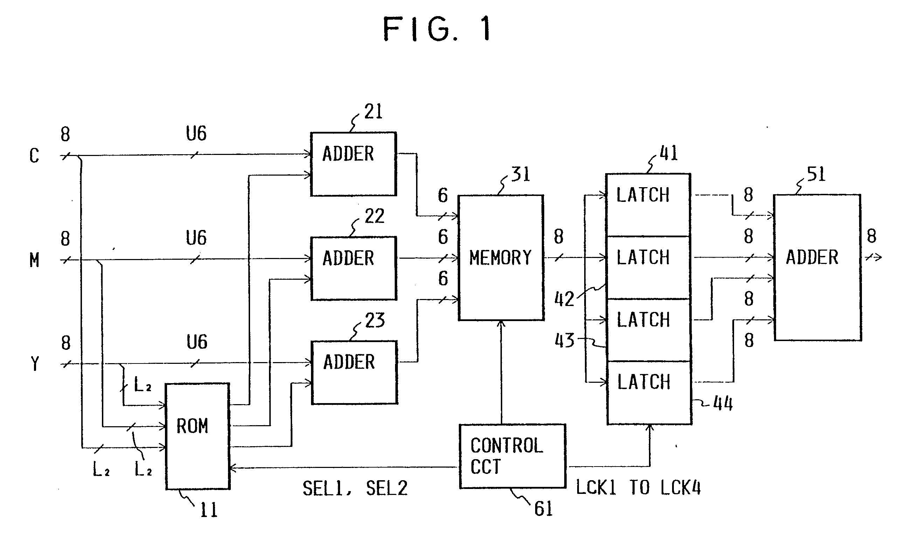

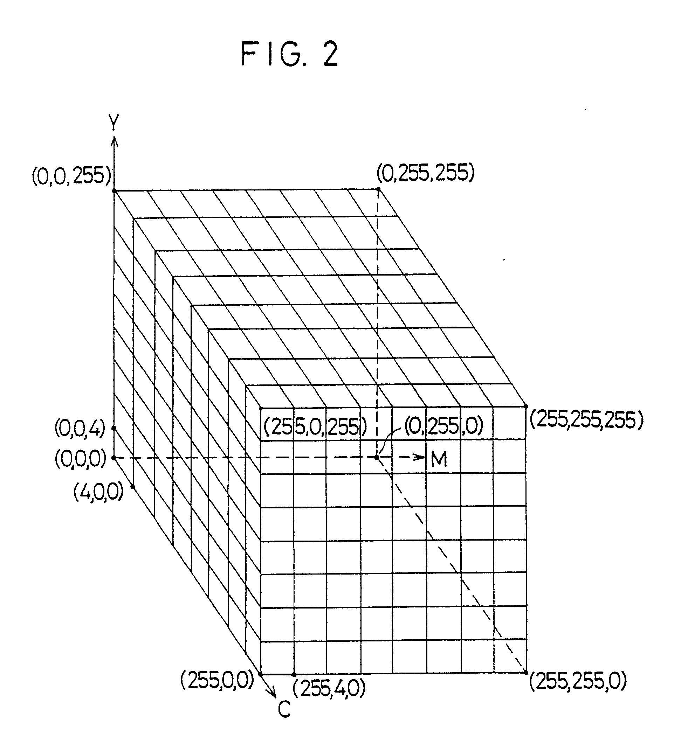

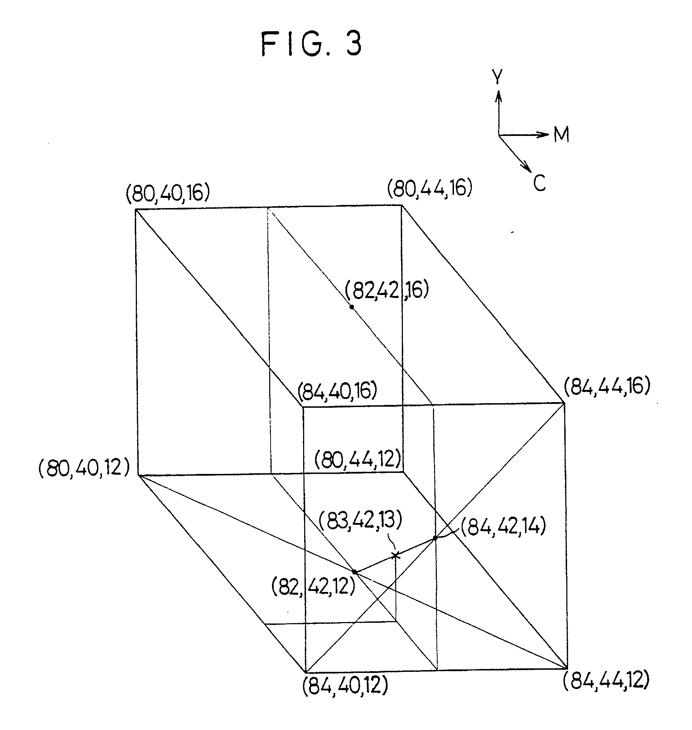

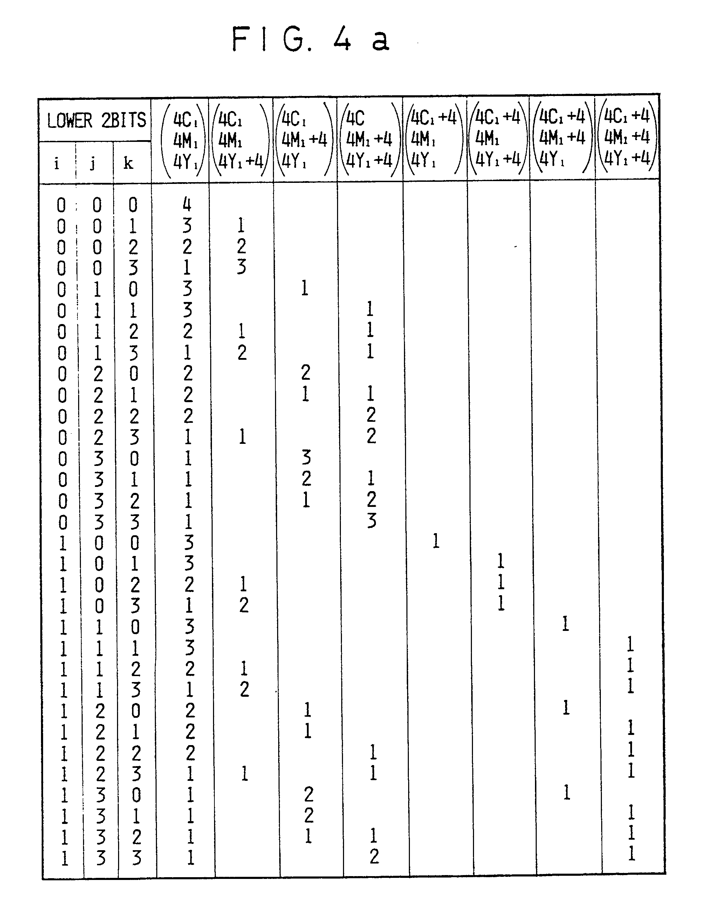

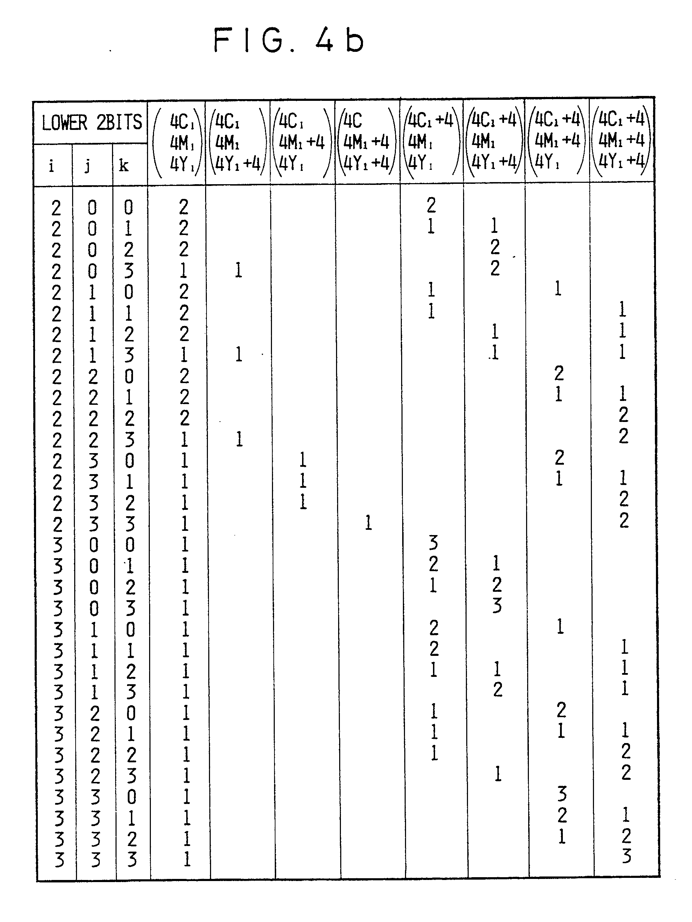

Figure 1 is a block diagram of an embodiment of colour gradation correction system according to the present invention, including a selection data table memory 11 provided by a read only memory (ROM) for storing a selection table as shown in Figures 4a and 4b, three adders 21 to 23 and a colour correction data table memory 31 provided by a ROM for storing previously calculated corrected colour gradation data as represented in Figures 2 and 3. Four latch circuits 41 to 44, such as registers, are provided for holding data output from the table memory 31, together with an adder 51 for calculating an average of the data held by the latch circuits 41 to 44, and a control circuit 61 operatively connected to and controlling the selection data table memory 11, the colour correction data table memory 31, and the latch circuits 41 to 44.

In the present embodiment, each item of colour gradation input data C, M and Y is expressed by eight bits, i.e. the colour gradation data has values expressed between 0 and 255. The upper or most significant six bits of each item of colour gradation input data are input to the corresponding adders 21 to 23, and the lower or least significant two bits are input to the selection data table memory 11. More generally, the most significant n-bits are input to the adders 21 to 23, and the least significant m - n (where m is greater than n) bits are input to the selection data table memory 11. Thus, in the described embodiment of the present invention m = 8 and n = 6.

4

Now, in this embodiment of the present invention, selection data for each combination defined by three least significant two bits is stored in the selection data table memory 11 as shown in Figures 4a and 4b, and corrected colour gradation data for each combination defined by three most significant six bits is stored in the colour correction data table memory 31. Figure 2 is a view representing the sets of the three items of corrected colour gradation data previously calculated in accordance with, for example, the above formula (2), and arranged in a three dimensional co-ordinate system. Note that the span of each individual block is four gradations, and, consequently, the number of blocks in each direction is eight, to thereby express the gradations 0 to 255.

In the prior art, the total memory size was $2^{24}$ x 3 bytes. Conversely, in the described embodiment of the present invention, the total memory size is $2^{18}$ x 3 bytes for the colour correction table memory 31 and $2^{2x3}$ bytes for the selection data table memory 11. Therefore, compared with the prior art, the total memory size is reduced to approximately 1/64.

An interpolation algorithm for the described embodiment according to the present invention will now be explained. When each item of colour gradation input data has a length of eight bits (0 to 255 gradations), and is divided into its most significant six bits (0 to 63) and its least significant two bits (0 to 3) the colour gradations of the input data C, M and Y can be expressed by the following equations, respectively:

$C = 4C_1 + i$ ($C_1$:0 - 63, i:0-3)
$M = 4M_1 + j$ ($M_1$:0 - 63, j:0-3)
$Y = 4Y_1 + k$ ($Y_1$:0 - 63, k:0-3)

where $C_1$, $M_1$ and $Y_1$ denote values (0 to 63) expressed by the most significant six bits, i, j and k denote indices (0 to 3) expressed by the least significant two bits, and 4 is the maximum number expressed by i, j and k, respectively.

As described above, the values $C_1$, $M_1$ and $Y_1$ defined by the most significant six bits can be used for designating a three dimensional location or address for the corrected colour gradation data stored in the table memory 31, as shown in Figure 2. The indices i, j and k are then used for adjusting the three dimensional location to select the nearest corrected colour gradation data in the table memory 31.

For any combination of C, M and Y when i = j = k = 0, a correct set of output values positioned in a lattice location at an inter-section where the previously calculated corrected colour gradation data is stored in the table memory 31 may be found. Therefore, in these cases, an interpolation is not necessary. For other values of the indices i, j and k, an adjustment of the spatial co-ordinates for selecting the closest colour gradation data is necessary, and the interpolation is also necessary.

An example of the process for adjusting the location where the closest corrected colour gradation data is stored, and of the interpolation will now be described.

Figure 3 shows a specific example of the three dimensional spatial arrangement represented in the memory 31 for the colour gradation input data (C, M, Y) = (80, 40, 12) and (C, M, Y) = (84, 44, 16). Figure 3 is an enlarged view of a part of Figure 2.

When the indices i, j and k are 2, respectively, a first set of corrected colour gradation data in a spatial location defined by $C = 4(C_1 + 1)$, $M = 4(M_1 + 1)$ and $Y = 4(Y_1 + 1)$ and another set of corrected colour gradation data in another spatial location at i = j = k = 0 are selected, and an intermediate value between the data in the above locations is calculated. For example, when (C, M, Y) = (82, 42, 16), the corrected colour gradation data positioned in a lattice location (80, 40, 16) and the corrected colour gradation data positioned in another lattice location (84, 44, 16) are selected and read out from the table memory 31, and the read data is interpolated to obtain a final set of corrected colour gradation values.

When the indices i, j and k are 1, respectively, an intermediate value between a first set of previously calculated corrected colour gradation data for the indices i, j and k being 2, and another set of previously calculated corrected colour gradation data for the indices i = j = k = 0, is calculated.

Further, when the indices i, j and k are 3, respectively, an intermediate value between a first set of previously calculated corrected colour gradation data for $C = 4(C_1 + 1)$, $M = 4(M_1 + 1)$ and $Y = 4(Y_1 + 1)$, and another set of the previously calculated colour gradation data for the indices i, j and k being 2, respectively, is calculated.

As an example, when a set of input data (C, M, Y) is (83, 42, 13), the location of the input data can be expressed as follows:

(4 x 20 + 3, 4 x 10 + 2, 4 x 3 + 1)

First, processing based on the condition k = 1 and the condition i = 3 is carried out to determine the sets of values from which the output data can finally be calculated. Namely, the following sets of values are determined:

(4 x 20 + 2, 4 x 10 + 2, 4 x 3)  (a)
(4 x 21, 4 x 10 + 2, 4 x 3 + 2)  (b)

Next, the processing for the conditions $i = j = k = 2$ is carried out as follows. First, the value of (a) is obtained by reading a set of data at a lattice location (80, 40 12) and another set of data at another lattice location (84, 44, 12), and, thereafter, the value of (b) is obtained from the data at a location (84, 40, 12) and the data at a location (84, 44, 16). A set of intermediate values between the data set (a) and the data set (b) is then calculated to obtain the corrected colour gradation data values for the input data (83, 42, 13)

When $(m - n) = 2$, and $i = j = k = 1$ or 3, the calculations for obtaining the intermediate values must be carried out three times, and the data from four lattice locations surrounding the designated input data position must be read up to four times. Assuming that the four sets of data read from the four lattice locations are represented as A, B, C and D, then the corrected colour gradation data E to be obtained is expressed by the following formula:

$$E = \tfrac{1}{2}(\tfrac{1}{2}(A + B) + \tfrac{1}{2}(C + D)) = \tfrac{1}{4}(A + B + C + D) \qquad (3)$$

This means that an average of the four sets of data is calculated as the final interpolated data, i.e. the final corrected colour gradation data.

In the described embodiment of the present invention, to facilitate the data handling, an unconditional looking up of the look-up table is carried out four times, and the average calculation from the four times read data is carried out whatever the initial combination of the indices i, j and k. Even if $i = j = k = 0$, as described above, the look-up table is looked up four times.

Figures 4a and 4b show the various combinations of the indices i, j and k, and how selection of the spatial locations is carried out to find the most relevant corrected colour gradation data and how data is to be read from the table memory 31. For example, when the indices i, j, k $= (0, 3, 1)$, sets of data at the lattice locations $(4C_1, 4M_1, 4Y_1)$ and $(4C_1\ 4M_1\ +4, 4Y_1\ +4)$ are each read one time and the set of data at the lattice location $(4C_1, 4M_1\ +4, 4Y_1)$ is read twice to obtain the four sets of data to be used in the interpolation.

The selection table memory 11 in Figure 1 stores a logical "0" as data for selecting $4C_1$, $4M_1$ or $4Y_1$, and a logical "1" as data for selecting $(4C_1\ +4, 4M_1\ +4$ or $4Y_1\ +4)$.

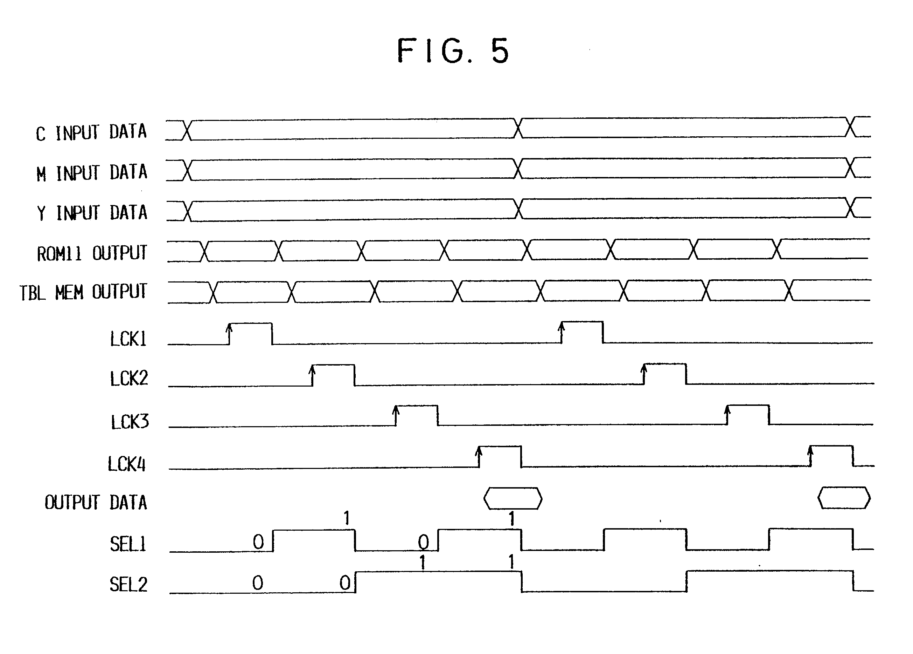

Figure 5 is a timing chart for the operation of the colour correction system shown in Figure 1, in accordance with the algorithm and the data processing discussed above. The operation for obtaining $C'$ from the input data (C, M, Y) will now be described with reference to Figures 1 and 5.

The most significant six bits of the input data C, M and Y as $4C_1$, $4M_1$ and $4Y_1$ are input to the adders 21 to 23, and the least significant two bits of the input data C, M and Y as the indices i, j and k are input to the selection table memory 11. These least significant two bits function to designate an address of the memory 11. The control circuit 61 outputs selection timing signals SEL1 and SEL2, and a combination of the selection timing signals SEL1 and SEL2 defines an access cycle number to the memory 11, i.e. the number thereof being 0 when SEL1 = 0 (low level) and SEL2 = 0, 1 when SEL1 = 1 (high level) and SEL2 = 0, and so on. When the signals SEL1 and SEL2 from the control circuit 61 are input to the memory 11 as an access signal, three bits of data are output to the corresponding adders 21 to 23 to be added to the corresponding most significant bits of data $4C_1$, $4M_1$ and $4Y_1$ at the adders 21 to 23 to thereby select the address location of the memory 31 from which the corrected colour gradation data set is to be read. Namely, the output data from the adders 21 to 23 functions to designate the address of the memory 31.

The data output from the memory 31 is consecutively held in the latch circuits 41 to 44 in response to latch clocks LCK 1 to LCK4 output from the control circuit 61, and the adder 51 calculates an average of the data output from the latch circuits 41 to 44 to obtain the interpolated colour gradation data $C'$ in accordance with the formula (3).

The corrected colour gradation data $M'$ and $Y'$ are obtained in the same way as mentioned above. Note that each set of corrected colour gradation data is obtained by considering the mutual relationship among all the three fundamental colour elements. Consequently, colour correction according to the present invention provides a high reproducibility of the corrected colour gradation result having an accuracy approximately equal to that obtained when all of the colour correction results of a combination of eight bits of each colour are stored in a table memory. And, as this requires a total relatively small capacity for the memories 11 and 31 and omits the conventional multiplying circuits, a compact and low cost colour gradation correction system is obtained.

Many features and advantages of the present invention may be apparent from the detailed description, and thus the appended claims are intended to cover all such features and advantages of the present invention which fall within the true spirit and scope thereof. Further, numerous modifications and changes will readily occur to those skilled in the art, and it is not desired to limit the invention to the exact construction and operation illustrated and described.

For example, the bit length m of the colour gradation input data and/or the corrected colour gradation output data can be an arbitrary length. Also, the bit length n of the most significant bits of the input data can

EP 0 410 719 A2

be an arbitrary length, such as seven or five.

Also, in the above embodiment, the selection data table memory 11 and the colour correction data table memory 31 are separate, but they can be incorporated as one unit. The adders 21 to 23, the latch circuits 41 to 44, the adder 51, and the control circuit 61 also can be realised by a single unit such as a microprocessor or a data signal processor.

Further, the above embodiment refers to colour printer processing of the three fundamental colours cyan, magenta and yellow, but the present invention can also apply to other colour data processing systems such as a colour display system for displaying colour images based on the three fundamental light colours red, green and blue. Accordingly, the fundamental colours may be cyan, magenta and yellow or red, green and blue.


**Claims**

1. A colour correction system for correcting a set of three-colour gradation input data, wherein each data item has a length of m-bits, to produce a set of corrected three colour gradation data, wherein each data item has a length of m-bits, characterised by memory means (31) for storing previously calculated sets of corrected colour gradation data in a three dimensional co-ordinate arrangement, wherein each co-ordinate location is designated by a respective set of n-bit address data, n being less than m, means (11, 61) for generating co-ordinate selection data from the least significant (m - n) bits in a set of colour gradation input data, means (21 to 23) operable in response to the most significant n-bits of the set of colour gradation input data and the co-ordinate selection data for generating sets of n-bit address data to cause the memory means to output selected sets of corrected colour gradation data, and means (41, 51) for receiving the selected sets of corrected colour gradation data and for calculating averages thereof for output.

2. A system according to claim 1 characterised in that the means for generating the co-ordinate selection data comprise further memory means (11) for pre-storing the co-ordinate selection data, the further memory means being arranged in response to the least significant (m -n) bits of colour gradation input data consecutively to produce respective sets of three co-ordinate selection data values, and in that the means for generating the sets of n-bit address data comprise adding means (21 to 23) for consecutively receiving the respective sets of co-ordinate selection data values and for adding the same to the most significant n-bits of the set of colour gradation input data for consecutively generating the sets of n-bit address data.

3. A system according to claim 1 or 2 characterised in that the means for calculating averages are arranged consecutively to receive and hold the sets of corrected colour gradation data.

4. A system according to claim 3 characterised in that the means for calculating averages comprise a plurality of registers (41 to 44), and an adding circuit (51).

5. A system according to any preceding claim characterised by a control circuit (61) for generating a first set of timing signals (SEL1, SEL2) for controlling the timing of the means for generating the co-ordinate selection data and a second set of timing signals (LCK1 to LCK4) for controlling the timing of the means for calculating averages.

6. A system according to claim 2 characterised in that the memory means for storing the previously calculated sets of corrected colour gradation data has a capacity of at least $2^{3 \times n} \times 3$ bytes, and in that the further memory means has a capacity of at least $2^{m-n \times 3}$ bytes.

7. A system according to claim 2 or 6 characterised in that the memory means for storing the previously calculated sets of corrected colour gradation data and the further memory means are incorporated as a single memory means.

8. A method of correcting a set of three colour gradation input data, wherein each data item has a length of m-bits, to produce a set of corrected three colour gradation data, wherein each data item has a length of m-bits, characterised by storing previously calculated sets of corrected colour gradation data in a three dimensional co-ordinate arrangement, wherein each co-ordinate location is designated by a respective set of n-bit address data, n being less then m, generating co-ordinate selection data from the least significant (m - n) bits in a set of colour gradation input data, generating sets of n-bit address data in response to the most significant n-bits of the set of colour gradation input data and the co-ordinate selection data to access selected sets of corrected colour gradation data, and calculating averages of the selected sets of corrected colour gradation data.

9. A system according to any of claims 1 to 7 or a method according to claim 8 characterised in that the three colour gradation data represents gradation data for cyan, magenta and yellow.

10. A system according to any of claims 1 to 7 or a method according to claim 8 characterised in that the three colour gradation data represents gradation data for red, green and blue.

7

EP 0 410 719 A2

11. A colour correction system for correcting three kinds of colour gradation input data, each having an m-bit length, to produce three kinds of corrected colour gradation data each having an m-bit length, characterised by first memory means (31) for storing previously calculated colour gradation corrected data arranged in a three dimensional co-ordinate space and defined by a combination of upper n-bits colour gradation data where m is greater than n; second memory means (11) for storing previously obtained co-ordinate correction data defined by a combination of lower (m -n) bits colour gradation data, and outputting a first to a third co-ordinate correction data in response to the lower bits colour gradation data; adding means (21 to 23) for adding said upper n-bits data of said first to third colour gradation input data and said first to third co-ordinate correction data output from said second memory means and outputting same to said first memory means as a memory address thereof, to cause an output of said stored colour gradation corrected data defined by said memory address from said first memory means; and average calculating means (41, 51) receiving said colour gradation corrected data from said first memory means and calculating averages of said three kinds of colour gradation corrected data.

12. A method of correcting three kinds of colour gradation input data, each having a m-bit length, to produce three kinds of corrected colour gradation data each having a m-bit length, characterised by the steps of: previously calculating corrected colour gradation data arranged in three dimensional co-ordinates in accordance with a combination of upper n-bits colour gradation data, where m is greater than n, and co-ordinate correction data in accordance with lower (m -n) bits colour gradation data; consecutively obtaining first to third previously calculated co-ordinate correction data on the basis of said lower colour gradation data in response to first to third operation timing; consecutively adding said upper n-bits data of said first to third colour gradation input data and said obtained first to third co-ordinate correction data; consecutively outputting said previously calculated colour gradation corrected data defined by said first to third corrected co-ordinates; and calculating averages of said consecutively output colour gradation corrected data.

8

# FIG. 1

# F I G. 2

# FIG. 3

# F I G. 4 a

| LOWER 2BITS | | | $\begin{pmatrix}4C_1\\4M_1\\4Y_1\end{pmatrix}$ | $\begin{pmatrix}4C_1\\4M_1\\4Y_1+4\end{pmatrix}$ | $\begin{pmatrix}4C_1\\4M_1+4\\4Y_1\end{pmatrix}$ | $\begin{pmatrix}4C\\4M_1+4\\4Y_1+4\end{pmatrix}$ | $\begin{pmatrix}4C_1+4\\4M_1\\4Y_1\end{pmatrix}$ | $\begin{pmatrix}4C_1+4\\4M_1\\4Y_1+4\end{pmatrix}$ | $\begin{pmatrix}4C_1+4\\4M_1+4\\4Y_1\end{pmatrix}$ | $\begin{pmatrix}4C_1+4\\4M_1+4\\4Y_1+4\end{pmatrix}$ |
|---|---|---|---|---|---|---|---|---|---|---|
| $i$ | $j$ | $k$ | | | | | | | | |
| 0 | 0 | 0 | 4 | | | | | | | |
| 0 | 0 | 1 | 3 | 1 | | | | | | |
| 0 | 0 | 2 | 2 | 2 | | | | | | |
| 0 | 0 | 3 | 1 | 3 | | | | | | |
| 0 | 1 | 0 | 3 | | 1 | | | | | |
| 0 | 1 | 1 | 3 | | | 1 | | | | |
| 0 | 1 | 2 | 2 | 1 | | 1 | | | | |
| 0 | 1 | 3 | 1 | 2 | | 1 | | | | |
| 0 | 2 | 0 | 2 | | 2 | | | | | |
| 0 | 2 | 1 | 2 | | 1 | 1 | | | | |
| 0 | 2 | 2 | 2 | | | 2 | | | | |
| 0 | 2 | 3 | 1 | 1 | | 2 | | | | |
| 0 | 3 | 0 | 1 | | 3 | | | | | |
| 0 | 3 | 1 | 1 | | 2 | 1 | | | | |
| 0 | 3 | 2 | 1 | | 1 | 2 | | | | |
| 0 | 3 | 3 | 1 | | | 3 | | | | |
| 1 | 0 | 0 | 3 | | | | 1 | | | |
| 1 | 0 | 1 | 3 | | | | | 1 | | |
| 1 | 0 | 2 | 2 | 1 | | | | 1 | | |
| 1 | 0 | 3 | 1 | 2 | | | | 1 | | |
| 1 | 1 | 0 | 3 | | | | | | 1 | |
| 1 | 1 | 1 | 3 | | | | | | | 1 |
| 1 | 1 | 2 | 2 | 1 | | | | | | 1 |
| 1 | 1 | 3 | 1 | 2 | | | | | | 1 |
| 1 | 2 | 0 | 2 | | 1 | | | | 1 | |
| 1 | 2 | 1 | 2 | | 1 | | | | | 1 |
| 1 | 2 | 2 | 2 | | | 1 | | | | 1 |
| 1 | 2 | 3 | 1 | 1 | | 1 | | | | 1 |
| 1 | 3 | 0 | 1 | | 2 | | | | 1 | |
| 1 | 3 | 1 | 1 | | 2 | | | | | 1 |
| 1 | 3 | 2 | 1 | | 1 | 1 | | | | 1 |
| 1 | 3 | 3 | 1 | | | 2 | | | | 1 |

# FIG. 4b

| LOWER 2BITS | | | $\begin{pmatrix}4C_1\\4M_1\\4Y_1\end{pmatrix}$ | $\begin{pmatrix}4C_1\\4M_1\\4Y_1+4\end{pmatrix}$ | $\begin{pmatrix}4C_1\\4M_1+4\\4Y_1\end{pmatrix}$ | $\begin{pmatrix}4C\\4M_1+4\\4Y_1+4\end{pmatrix}$ | $\begin{pmatrix}4C_1+4\\4M_1\\4Y_1\end{pmatrix}$ | $\begin{pmatrix}4C_1+4\\4M_1\\4Y_1+4\end{pmatrix}$ | $\begin{pmatrix}4C_1+4\\4M_1+4\\4Y_1\end{pmatrix}$ | $\begin{pmatrix}4C_1+4\\4M_1+4\\4Y_1+4\end{pmatrix}$ |
|---|---|---|---|---|---|---|---|---|---|---|
| i | j | k | | | | | | | | |
| 2 | 0 | 0 | 2 |  |  |  | 2 |  |  |  |
| 2 | 0 | 1 | 2 |  |  |  | 1 | 1 |  |  |
| 2 | 0 | 2 | 2 |  |  |  |  | 2 |  |  |
| 2 | 0 | 3 | 1 | 1 |  |  |  | 2 |  |  |
| 2 | 1 | 0 | 2 |  |  |  | 1 |  | 1 |  |
| 2 | 1 | 1 | 2 |  |  |  | 1 |  |  | 1 |
| 2 | 1 | 2 | 2 |  |  |  |  | 1 |  | 1 |
| 2 | 1 | 3 | 1 | 1 |  |  |  | 1 |  | 1 |
| 2 | 2 | 0 | 2 |  |  |  |  |  | 2 |  |
| 2 | 2 | 1 | 2 |  |  |  |  |  | 1 | 1 |
| 2 | 2 | 2 | 2 |  |  |  |  |  |  | 2 |
| 2 | 2 | 3 | 1 | 1 |  |  |  |  |  | 2 |
| 2 | 3 | 0 | 1 |  | 1 |  |  |  | 2 |  |
| 2 | 3 | 1 | 1 |  | 1 |  |  |  | 1 | 1 |
| 2 | 3 | 2 | 1 |  | 1 |  |  |  |  | 2 |
| 2 | 3 | 3 | 1 |  |  | 1 |  |  |  | 2 |
| 3 | 0 | 0 | 1 |  |  |  | 3 |  |  |  |
| 3 | 0 | 1 | 1 |  |  |  | 2 | 1 |  |  |
| 3 | 0 | 2 | 1 |  |  |  | 1 | 2 |  |  |
| 3 | 0 | 3 | 1 |  |  |  |  | 3 |  |  |
| 3 | 1 | 0 | 1 |  |  |  | 2 |  | 1 |  |
| 3 | 1 | 1 | 1 |  |  |  | 2 |  |  | 1 |
| 3 | 1 | 2 | 1 |  |  |  | 1 | 1 |  | 1 |
| 3 | 1 | 3 | 1 |  |  |  |  | 2 |  | 1 |
| 3 | 2 | 0 | 1 |  |  |  | 1 |  | 2 |  |
| 3 | 2 | 1 | 1 |  |  |  | 1 |  | 1 | 1 |
| 3 | 2 | 2 | 1 |  |  |  | 1 |  |  | 2 |
| 3 | 2 | 3 | 1 |  |  |  |  | 1 |  | 2 |
| 3 | 3 | 0 | 1 |  |  |  |  |  | 3 |  |
| 3 | 3 | 1 | 1 |  |  |  |  |  | 2 | 1 |
| 3 | 3 | 2 | 1 |  |  |  |  |  | 1 | 2 |
| 3 | 3 | 3 | 1 |  |  |  |  |  |  | 3 |

# FIG. 5

EP 0 410 719 A2